# EUROPÄISCHE PATENTSCHRIFT

(11) **EP 2 418 364 B1**
(45) Veröffentlichungstag und Bekanntmachung des Hinweises auf die Patenterteilung: **01.05.2013**
(21) Anmeldenummer: 11008918.2
(22) Anmeldetag: 06.12.2007
(51) Int. Cl.: F01N 3/20, F16L 11/127, F16L 11/08, F16L 53/00, H05B 3/58

(54) **Beheizbare Leitung**
Heatable conduit
Conduite pouvant être chauffée

(30) Priorität: 27.03.2007 DE 102007014670
(43) Veröffentlichungstag der Anmeldung: 15.02.2012
(62) Teilanmeldung aus: 07856427.5
(73) Patentinhaber: VERITAS AG, 63571 Gelnhausen (DE)
(72) Erfinder: Seyler, Andreas, 63584 Gründau (DE); Hummel, Gerhard, 63633 Birstein (DE); Van Hooren, Marc, 63579 Freigericht (DE)
(74) Vertreter: Grünecker, Kinkeldey, Stockmair & Schwanhäusser

(56) Entgegenhaltungen:
- EP-A- 0 312 204
- EP-A- 1 329 660
- EP-A- 1 764 541
- EP-A1- 1 519 098
- WO-A-2007/032033
- JP-A- 2000 012 200
- US-A- 5 428 706

## Beschreibung

Die vorliegende Erfindung betrifft eine beheizbare Leitung, insbesondere zum Transport von Flüssigkeiten in Fahrzeugen gemäß dem Oberbegriff von Anspruch 1.

Eine derartige beheizbare Flüssigkeitsleitung ist beispielsweise aus der EP 0 312 204 A bekannt. Für die Beheizung der Leitung sind zwei Elektrodendrähte spiralförmig um eine innere Lage gewickelt. Weiterhin sind zwei weitere äußere Lagen um die Elektrodendrähte herum zur Wärmeisolation vorgesehen.

Solche beheizbaren Leitungen werden z.B. für den Transport von Harnstoffen wie etwa dem so genannten "AdBlue" für dieselbetriebene Fahrzeuge eingesetzt, um hier ein Einfrieren bei entsprechend niedrigen Umgebungstemperaturen zu vermeiden. Darüber hinaus können diese Leitungen auch zum Transport von Dieselkraftstoff, Kühl- bzw. Waschwasser oder Bremsöl verwendet werden. Zusätzlich zu dem gewünschten Effekt der Verhinderung des Einfrierens bzw. der Viskositätserhöhung der jeweiligen Flüssigkeit können die beheizbaren Leitungen im Falle des Dieselkraftstoffs dessen Vorwärmung dienen, was beispielsweise für eine bessere Zündfähigkeit bzw. Verbrennung des Diesels sorgt.

Aus der WO 2007/032033 A1 ist einen mehrschichtige beheizbare Leitung bekannt, bei welcher ein Heizdraht spiralförmig um eine innere Lage gewickelt ist. Über den Heizdraht ist ein dichtendes Element vorgesehen, welches auf den Heizdraht aufgeschrumpft wird. Weiterhin sind zwei isolierende Außenschichten vorgesehen.

Zum Stand der Technik zählt auch die EP 1 764 541 A1, aus der eine elektrische Heizvorrichtung sowie ein beheizbarer Schlauch und ein Herstellungsverfahren bekannt sind. Der beheizte Schlauch weist eine elektrische Heizvorrichtung auf, die mindestens einen elektrischen Heizleiter und mindestens zwei Stromversorgungsleitungen hat, die mit einer Spannungsquelle verbindbar sind. Weiterhin ist der mindestens eine elektrische Heizleiter alternierend mit einer der mindestens zwei Stromversorgungsleitungen elektrisch verbunden. Diese Ausgestaltung ermöglicht ein Ablängen eines mit einer solchen Heizvorrichtung versehenen Schlauchs in jedem gewünschten Maß.

Die Druckschrift JP 2000 012200 A offenbart einen Heizdraht, welcher von zwei daneben angeordneten Drähten mit Strom versorgt wird. Die Drähte sind zusammen von einer gemeinsamen isolierenden Hülle umgeben. Der Heizdraht kann auf eine gewünschte Länge konfektioniert werden.

Nachteilig ist bei den zuvor beschriebenen Heizvorrichtungen, dass der Heizdraht schwer von außen kontaktierbar ist, nachdem die Konfektionierung der Leitungslänge erfolgt ist.

Es ist daher Aufgabe der Erfindung, eine beheizbare Leitung bereitzustellen, bei der eine Kontaktierung des Heizdrahtes deutlich einfacher realisierbar ist.

Diese Aufgabe wird erfindungsgemäß durch den Gegenstand des Anspruchs 1 gelöst. Weitere Ausgestaltungen der Erfindung sind in den abhängigen Ansprüchen aufgeführt.

Der Einsatztemperaturbereich beschreibt hierbei den Umgebungs-Temperaturbereich, innerhalb dessen der Betrieb eines Fahrzeuges normalerweise vorgesehen ist, d.h. etwa zwischen -40°C und +70°C.

Hinsichtlich der Bezeichnungen "*innere Lage*" und "*äußere Lage*" wird darauf hingewiesen, dass hierdurch keine absoluten geometrischen (Positions-)Lagen beschrieben sind, so dass sich beispielsweise an die innere Lage innen eine weitere, z.B. innerste Lage, und an die äußere Lage außen eine weitere, z.B. eine Decklage, anschließen kann.

Es kann von Vorteil sein, dass die Wärmeleitfähigkeit der inneren Lage größer als 0,75 W/mK ist und vorzugsweise zwischen 0,8 und 1,0 W/mK liegt, und die Wärmeleitfähigkeit der äußeren Lage kleiner als 0,05 W/mK ist und vorzugsweise zwischen 0,01 und 0,04 W/mK liegt. Bei besagten Werten der Wärmeleitfähigkeit für die innere und die äußere Lage kommt es zu einer sehr effektiven Wärmeleitung in Richtung der durch die Leitung transportierten Flüssigkeit und nur zu einer geringen Wärmeleitung in Richtung der Umgebung der Leitung.

Ebenso kann es von Vorteil sein, dass die innere und/oder die äußere Lage ein polymeres Material, vorzugsweise einen elastomeren Werkstoff, aufweisen bzw. aufweist. Diese Materialien lassen sing generell gut chemikalien- bzw. medienbeständig, vergleichsweise günstig und zudem relativ einfach verarbeitbar bzw. formbar.

Zudem kann es von Vorteil sein, dass die innere und die äußere Lage den Werkstoff EPDM aufweisen. Dieser Werkstoff zeichnet sich insbesondere durch eine gute Chemikalien- bzw. Medienbeständigkeit, vor allem in Hinblick auf Harnstoff, aus. Darüber hinaus besitzt er eine hohe Wetter- und Feuchtigkeitsbeständigkeit, eine hohe Ozonresistenz und eine sehr gute thermische Beständigkeit.

Darüber hinaus kann es von Vorteil sein, dass die äußere Lage ein eine offene Zellstruktur aufweisendes EPDM aufweist und vorzugsweise aus diesem besteht. Durch die offene Zellstruktur ergibt sich eine sehr geringe Wärmeleitfähigkeit, so dass eine Wärmeleitung nach außen, d.h. zur Umgebung der beheizbaren Leitung, nur schwer stattfinden kann.

In einer bevorzugten Ausführungsform weist die innere Lage ein mit Partikeln hoher Wärmeleitfähigkeit gefülltes EPDM auf und besteht vorzugsweise aus diesem. Durch die Füllung mit Partikeln, welche eine hohe Wärmeleitfähigkeit aufweisen, ergibt sich insgesamt eine hohe Wärmeleitfähigkeit des gefüllten EPDM-Systems, so dass die Wärmeleitung nach innen, d.h. in Richtung der Flüssigkeit, sehr effektiv ist.

Gemäß der Erfindung ergibt sich eine besonders druckfeste Leitung, wobei das Heizelement zwischen den beiden Verstärkungslagen gut geschützt ist. Im Falle der Verwendung eines Heizdrahtes als Heizelement ist hierbei insbesondere die entsprechende Drahtisolierung bei der Verarbeitung der Leitung geschützt, so dass beispielsweise eine Verletzung des Heizdrahtes bzw. der Drahtisolierung durch das Extrusionswerkzeug während der Extrusion der äußeren Lage, z.B. der Deckenlage, vermieden werden kann. Zudem bietet die Anordnung des Heizelements zwischen den beiden Verstärkungslagen Vorteile hinsichtlich dessen elektrischer Kontaktierung, beispielsweise mit einem Kontaktstecker. Das Heizelement hat bei dieser Anordnung im Wesentlichen Kontakt mit den Verstärkungslagen und kann dadurch relativ leicht bei äußerem Kraftangriff bewegt bzw. in seiner Lage verändert werden. So kann beispielsweise bei Verwendung eines Heizdrahtes als Heizelement dieser zwecks Kontaktierung auf einfache und mühelose Weise am gegebenenfalls abgelängten Ende der Leitung herausgezogen werden.

Diese beschriebene einfache Art der Kontaktierung des Heizelements steht im Gegensatz zu der aufwendigen und nachteiligen Kontaktierungsmethode gemäß Druckschrift EP 1 329 660, die einen flexiblen, mehrschichtigen und beheizbaren Schlauch beschreibt, wobei der Schlauch 1 wenigstens eine Verstärkungsschicht 2, eine elastomere Außenschicht 4 und einen elektrischen Heizleiter 3 aufweist. Hierbei ist der Heizleiter 3 außerhalb der äußeren Lage der Verstärkungsschicht 2, aber unter oder innerhalb der elastomeren Außenschicht 4 eingebettet. Um hier eine Kontaktierung des Heizleiters beispielsweise mit einem Kontaktstecker zu realisieren, ist es notwendig, die frei zugänglichen Enden des Heizdrahts am stirnseitigen Ende eines Schlauchabschnitts z.B. mit einer Zange zu greifen und dann mit einer radial nach außen wirkenden Kraft unter Durchtrennen der elastomeren Außenschicht freizulegen, wobei es zumindest in Bereich, in dem der Heizleiter radial nach außen gezogen wurde, zu einer Beschädigung der Außenschicht kommt.

Vorzugsweise ist das Heizelement zumindest ein Heizdraht. Solch ein Heizelement ist relativ günstig und lässt sich vergleichsweise verarbeiten bzw. in die Leitung während deren Herstellung einfügen.

Es kann von Vorteil sein, dass sich das Heizelement zumindest entlang der Axialrichtung der Leitung erstreckt. Diese Art der Anordnung lässt sich besonders einfach realisieren.

Es kann ebenso von Vorteil sein, dass sich das Heizelement sowohl entlang der Axialrichtung, als auch der Radialrichtung der Leitung erstreckt. Beispielsweise ist es möglich, dass das Heizelement, z.B. in Form eines Heizdrahtes, innerhalb der Leitung spiralförmig angeordnet ist. Somit kann die Heizleistung pro Längenabschnitt der Leitung erhöht bzw. durch die Steigung gezielt angepasst werden.

Die Merkmale und Vorteile der Erfindung werden eingehender in der nachstehenden Beschreibung dargelegt, wobei auf die beigefügten Zeichnungen Bezug genommen wird, auf denen folgendes dargestellt ist:
- Fig. 1:: perspektivische Ansicht einer erfindungsgemäßen beheizbaren Leitung mit 4 Lagen
- Fig. 2:: perspektivische Ansicht einer erfindungsgemäßen beheizbaren Leitung mit 5 Lagen
- Fig. 3a:: Schematische Darstellung einer Anordnungsmöglichkeit von stromführenden Elementen innerhalb einer erfindungsgemäßen Leitung
- Fig. 3b:: Schematische Darstellung einer weiteren Anordnungsmöglichkeit von stromführenden Elementen innerhalb einer unkonfektionierten erfindungsgemäßen Leitung
- Fig. 3c:: Schematische Darstellung einer weiteren Anordnungsmöglichkeit von stromführenden Elementen innerhalb einer unkonfektionierten erfindungsgemäßen Leitung.

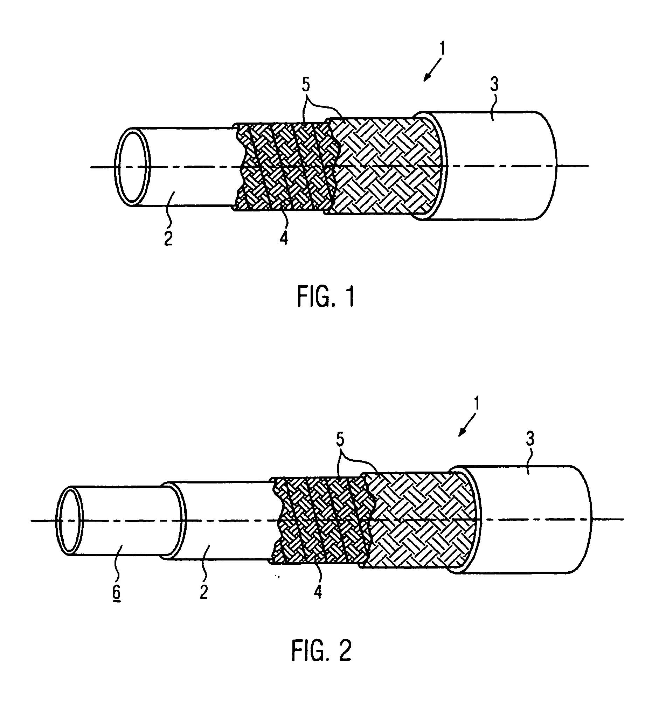

Die nicht maßstäbliche Figur 1 zeigt die perspektivische Ansicht einer erfindungsgemäßen, vierlagigen Leitung 1 mit einer inneren Lage 2, einer äußeren Lage 3 und zwei zwischen der inneren Lage und der äußeren Lage angeordneten Verstärkungslagen 5. Zwischen den beiden Verstärkungslagen ist das Heizelement 4 in Form eines Heizdrahtes angeordnet, wobei der Heizdraht spiralförmig angeordnet ist. Andere Anordnungen des Heizdrahtes sind vorstellbar. So ist beispielsweise denkbar, dass der Heizdraht sich ausschließlich entlang der Axialrichtung der Leitung erstreckt. Zudem können anstatt eines einzelnen mehrere Heizdrähte vorgesehen sein. Die äußere Lage 3 besteht aus EPDM mit einer offenen Zellstruktur und weist eine geringe Wärmeleitfähigkeit von 0,035 W/mK auf. Die innere Lage 2 besteht aus EPDM, das mit Partikeln hoher Wärmeleitfähigkeit, z.B. aus Aluminiumoxid oder Aluminiumnitrid, gefüllt ist und weist eine hohe Wärmeleitfähigkeit von 1 W/mK auf. Die Verstärkungslagen 5 bestehen aus einem textilen Gewebe, es sind jedoch auch metallische Gewebe vorstellbar. Zudem ist neben der Verwendung eines textilen oder metallischen Gewebes die Verwendung eines ebensolchen Gewirkes oder Gestrickes oder Geflechts möglich.

Die nicht maßstäbliche Figur 2 zeigt die perspektivische Ansicht einer erfindungsgemäßen, fünflagigen Leitung 1. Unterschiedlich im Gegensatz zur Leitung gemäß Figur 1 ist lediglich die zusätzliche Verwendung einer sich innen an die Innenlage 2 anschließenden Sperrschicht 6 aus einem PP-EPDM-Copolymer, weshalb auf die verbleibenden gleichen Merkmale hier nicht näher eingegangen wird.

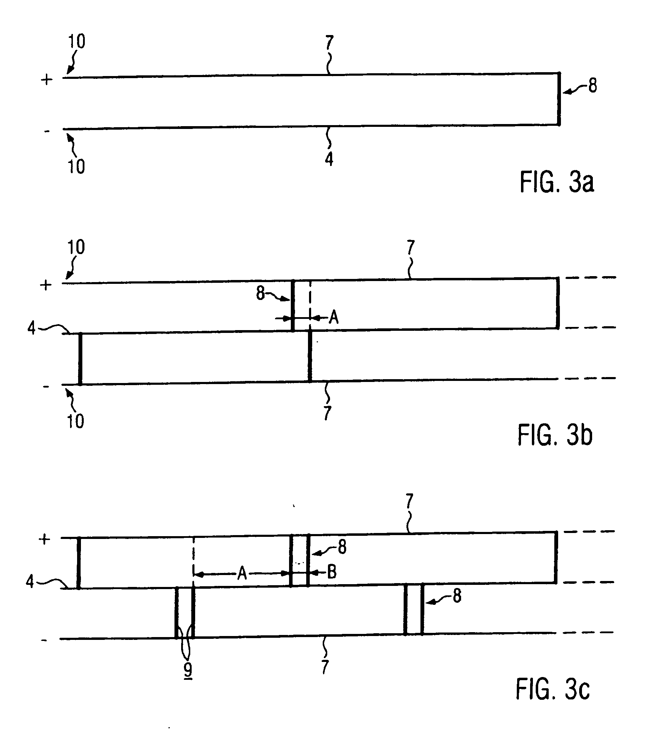

Figur 3a zeigt die schematische, nicht maßstäbliche Darstellung einer ersten Anordnungsmöglichkeit von stromführenden Elementen innerhalb einer erfindungsgemäßen Leitung. Das Heizelement 4, beispielsweise in Form eines Heizleiters, ist an einem Ende über eine Verbindungseinrichtung 8 mit einem Ende des sich im Wesentlichen entlang der nicht dargestellten Leitung erstreckenden Leiters 7 elektrisch verbunden, wobei der Kontaktierungsabschnitt 10 des Heizleiters mit dem Minuspol einer nicht dargestellten Spannungsquelle und der Kontaktierungsabschnitt 10 des Leiters mit dem Pluspol der nicht dargestellten Spannungsquelle verbunden ist, und die beiden benachbarten Kontaktierungsabschnitte etwa 1 cm voneinander beabstandet sind.

Figur 3b zeigt die schematische, nicht maßstäbliche Darstellung einer weiteren Anordnungsmöglichkeit von stromführenden Elementen innerhalb einer noch unkonfektionierten und damit nicht auf die Einsatzlänge abgelängten erfindungsgemäßen Leitung. Neben dem Heizelement 4, beispielsweise in Form eines Heizleiters, sind zwei Leiter 7 vorhanden, die sich im Wesentlichen entlang der nicht dargestellten Leitung 1 erstrecken. Die Darstellung gibt nur einen Ausschnitt wieder, der sich in gleicher Weise in beliebiger Länge fortsetzen kann (angedeutet in der Figur durch gestrichelte Linien).

Der als Plusleiter dienende Leiter ist mit dem Kontaktierungsabschnitt 10 am Pluspol einer nicht dargestellten Spannungsquelle verbunden, während der andere, als Minusleiter dienende Leiter mit dem Kontaktierungsabschnitt 10 am Minuspol einer nicht dargestellten Spannungsquelle verbunden ist, wobei der Abstand der beiden Kontaktierungsabschnitt etwa 1 cm beträgt. In dem Ausschnitt gemäß Figur 3b ist der Plusleiter über zwei Verbindungseinrichtungen 8 mit dem Heizleiter verbunden, während der Minusleiter über zwei Verbindungseinrichtungen 8 mit dem Heizleiter verbunden ist. Obwohl anhand des Ausschnitts nicht erkennbar, stimmt auch bei mehr als zwei Verbindungseinrichtungen die Anzahl der Verbindungseinrichtungen, die zwischen Plusleiter und Heizleiter angeordnet sind mit der Anzahl an Verbindungseinrichtungen, die zwischen Minusleiter und Heizleiter angeordnet sind, überein. Ebenfalls anhand des Ausschnitts nicht erkennbar ist der im Wesentlichen äquidistale Abstand zweier benachbarter Verbindungseinrichtungen, die den Plusleiter mit dem Heizleiter bzw. den Minusleiter mit dem Heizleiter verbinden, der beispielsweise 10 cm beträgt.

Die Abstände zwischen den benachbarten Verbindungseinrichtungen, die den Plusleiter mit dem Heizleiter verbinden, und die Abstände zwischen den benachbarten Verbindungseinrichtungen, die den Minusleiter mit dem Heizleiter verbinden, sind im Wesentlichen gleich. Weiterhin sind die den Plusleiter mit dem Heizleiter verbindenden Verbindungseinrichtungen gegenüber den den Minusleiter mit dem Heizleiter verbindenden Verbindungseinrichtungen versetzt angeordnet, so dass jeweils zwei benachbarte Verbindungseinrichtungen, von denen eine den Plusleiter mit dem Heizleiter und die andere den Minusleiter mit dem Heizleiter verbindet, in Bezug auf die Erstreckungsrichtung der Leiter 7 beabstandet sind. Der entsprechende Abstand A beträgt beispielsweise 2 cm.

Die beschriebene Anordnung von Heizleiter, Plusleiter, Minusleiter und den Verbindungseinrichtungen erlaubt hierbei die jeweilige Durchtrennung der Leitung an den Stellen, wo die den Heizleiter mit dem Plusleiter und den Heizleiter mit dem Minusleiter verbindenden Verbindungseinrichtungen benachbart zueinander angeordnet sind. Die durch das Durchtrennen entstehenden Leitungsteile weisen dann jeweils eine im Wesentlichen gleich lange Heizleiterlänge zwischen der Stelle, an welcher der Heizleiter über die entsprechende Verbindungseinrichtung mit dem Plusleiter verbunden ist, und der Stelle, an welcher der Heizleiter über die entsprechende Verbindungseinrichtung mit dem Minusleiter verbunden ist, auf. Dadurch ergeben sich bei den abgetrennten Leitungsteilen auch im Wesentlichen gleiche Heizleistungen.

Durch das Abtrennen der Leitungsteile einer bestimmten Länge von einer Leitung, die ein vielfaches dieser Länge aufweist, gelingt auf sehr einfache und rationelle Weise die Herstellung von Leitungen bestimmter bzw. definierter, gleicher Länge. Die unkonfektionierte Ausgangsleitung lässt sich hierbei kontinuierlich, beispielsweise innerhalb eines Extrusionsprozesses, sehr wirtschaftlich fertigen. Zur Kennzeichnung der Konfektionierungs- oder Trennstellen kann während des Extrusionsprozesses das Einbringen einer jeweiligen Markierung erfolgen.

Zudem kann durch die Mitführung sowohl des Plus-, als auch des Minusleiters die Leitung die zusätzliche Funktion eines elektrischen Leiters übernehmen, so dass eine Durchleitung von Strom durch die Leitung ebenfalls möglich wird. Dies erlaubt beispielsweise die elektrische Verbindung der Leitung mit einem Verbraucher. Ein sonst benötigter eigener Leiter zur elektrischen Versorgung des Verbrauchers wird damit überflüssig und kann eingespart werden.

Darüber hinaus erlaubt die Mitführung sowohl des Plus-, als auch des Minusleiters die elektrische Versorgung des Heizleiters von einer (Kontaktierungs-)Stelle der Leitung, so dass ein einziger Stecker für die Stromversorgung des Heizleiters ausreichend ist.

Figur 3c zeigt die schematische, nicht maßstäbliche Darstellung einer weiteren Anordnungsmöglichkeit von stromführenden Elementen innerhalb einer noch unkonfektionierten und damit nicht auf die Einsatzlänge abgelängten erfindungsgemäßen Leitung. Neben dem Heizelement 4, beispielsweise in Form eines Heizleiters, sind zwei Leiter 7 vorhanden, die sich über die gesamte Länge der nicht dargestellten Leitung 1 erstrecken. Auch diese Darstellung gibt nur einen Ausschnitt wieder, der sich in gleicher Weise in beliebiger Länge fortsetzen kann (angedeutet in der Figur durch gestrichelte Linien).

Der als Plusleiter dienende Leiter ist mit dem Kontaktierungsabschnitt 10 am Pluspol einer nicht dargestellten Spannungsquelle verbunden, während der andere, als Minusleiter dienende Leiter mit dem Kontaktierungsabschnitt 10 am Minuspol der nicht dargestellten Spannungsquelle verbunden ist. Der Plusleiter und der Minusleiter sind jeweils über trennbare Verbindungseinrichtungen 8 mit dem Heizleiter verbunden. Hierbei umfasst jede Verbindungseinrichtung in ungetrenntem Zustand zwei im Wesentlichen parallel zueinander verlaufende, einen Abstand von beispielsweise 2 cm zueinander aufweisende Verbindungsleiter 9. In dem Ausschnitt gemäß Figur 3c ist der Plusleiter über eine ungetrennte und zwei getrennte Verbindungseinrichtungen 8 mit dem Heizleiter verbunden, während der Minusleiter über zwei ungetrennte Verbindungseinrichtungen 8 mit dem Heizleiter verbunden ist. Insgesamt ergibt sich also eine gleiche Anzahl an Verbindungsleitern zwischen dem Plusleiter und dem Heizleiter und dem Minusleiter und dem Heizleiter.

Obwohl anhand des Ausschnitts nicht zu erkennen, stimmt auch bei mehr als zwei Verbindungseinrichtungen 8 respektive vier Verbindungsleitern 9 die Anzahl der Verbindungseinrichtungen bzw. der Verbindungsleiter, die zwischen Plusleiter und Heizleiter angeordnet sind mit der Anzahl an Verbindungseinrichtungen bzw. der Verbindungsleiter, die zwischen Minusleiter und Heizleiter angeordnet sind, überein.

Jeweils zwei benachbarte Verbindungseinrichtungen, welche den Plusleiter mit dem Heizelement verbinden und jeweils zwei benachbarte Verbindungseinrichtungen, welche den Minusleiter mit dem Heizelement verbinden, sind im Wesentlichen äquidistant, beispielsweise mit einer Länge von 10 cm voneinander beabstandet. Darüber hinaus stimmt der Abstand zwischen jeweils zwei benachbarten Verbindungseinrichtungen, welche den Plusleiter mit dem Heizelement verbinden, mit dem Abstand zwischen jeweils zwei benachbarten Verbindungseinrichtungen, welche den Minusleiter mit dem Heizleiter verbinden, im Wesentlichen überein.

Zwei benachbarte Verbindungseinrichtungen, wovon eine den Plusleiter und eine den Minusleiter mit dem Heizelement verbindet, sind in Bezug auf die Erstreckungsrichtung der Leiter mit einem Abstand A von beispielsweise 5 cm zueinander angeordnet.

Die gemäß Figur 3c beschriebene Anordnung von Heizleiter, Plusleiter, Minusleiter und den Verbindungseinrichtungen erlaubt das Abtrennen beliebig langer endständiger Leitungsteile bzw. Leitungsabschnitte von einer vorkonfektionierten Leitung oder das Abtrennen einer beliebig langen Leitung von einer beispielsweise kontinuierlichen, endlosen Leitung, wobei die jeweilige Durchtrennung an den Stellen der zwei Verbindungsleiter aufweisenden Verbindungseinrichtungen erfolgt. Somit ist eine gezielte Konfektionierung bzw. Längenanpassung der Leitung an den jeweiligen Anwendungsfall bzw. die jeweilige Einbausituation möglich. Durch die spezielle Anordnung der Verbindungseinrichtungen ergibt sich auch bei Abtrennung beliebig langer endständiger Leitungsteile bzw. -abschnitte einer vorkonfektionierten Leitung oder bei Abtrennung eines beliebig langen Leitungsstücks von einer kontinuierlichen, endlosen Leitung in den dann vorhandenen bzw. verbleibenden Leitungsabschnitten eine jeweils im Wesentlichen gleiche Heizleiterlänge und damit eine im Wesentlichen gleiche Heizleistung.

Hiermit gelingt auf sehr einfache und rationelle Weise die Herstellung von Leitungen spezieller und dem Bedarfsfall angepasster Längen, wobei auch eine Anpassung bzw. Konfektionierung vor Ort möglich ist. Die unkonfektionierte Ausgangsleitung lässt sich hierbei kontinuierlich, beispielsweise innerhalb eines Extrusionsprozesses, sehr wirtschaftlich fertigen. Zur Kennzeichnung der Konfektionierungs- oder Trennstellen kann während des Extrusionsprozesses das Einbringen einer jeweiligen Markierung erfolgen.

## Patentansprüche

1. Beheizbare Leitung (1), insbesondere zum Transport von Flüssigkeiten in Fahrzeugen, umfassend zumindest eine innere Lage (2), eine äußere Lage (3) und ein Heizelement (4), wobei zumindest innerhalb des Einsatztemperaturbereichs der beheizbaren Leitung (1) die innere Lage (2) eine höhere Wärmeleitfähigkeit aufweist als die äußere Lage (3),
**dadurch gekennzeichnet, dass**
die Leitung (1) zumindest vierlagig ist mit zwei zwischen der inneren (2) und der äußeren Lage (3) angeordneten Verstärkungslagen (5), wobei das Heizelement (4) zwischen den beiden Verstärkungslagen (5) angeordnet ist und im Wesentlichen Kontakt mit den Verstärkungslagen (5) hat und innerhalb der Leitung (1) mindestens ein sich entlang der Leitung (1) erstreckender elektrischer Leiter (7) vorgesehen ist.

2. Beheizbare Leitung (1) nach Anspruch 1, **dadurch gekennzeichnet, dass** zwei elektrische Leiter (7) vorgesehen sind, welche sich im Wesentlichen entlang der Leitung (1) erstrecken.

3. Beheizbare Leitung (1) nach zumindest einem der vorhergehenden Ansprüche, **dadurch gekennzeichnet, dass** die beheizbare Leitung (1) mit einem elektrischen Verbraucher verbindbar ist.

4. Beheizbare Leitung (1) nach zumindest einem der vorhergehenden Ansprüche, **dadurch gekennzeichnet, dass** das Heizelement (4), beispielsweise in Form eines Heizleiters, an einem Ende über eine Verbindungseinrichtung (8) mit dem sich entlang der Leitung erstreckenden elektrischen Leiter (7) elektrisch verbunden ist.

5. Beheizbare Leitung (1) nach zumindest einem der vorhergehenden Ansprüche, **dadurch gekennzeichnet, dass** ein Kontaktierungsabschnitt (10) des Heizleiters (4) mit dem Minuspol einer Spannungsquelle und ein Kontaktabschnitt (10) des elektrischen Leiters (7) mit dem Pluspol der Spannungsquelle verbindbar ist.

6. Beheizbare Leitung (1) nach Anspruch 5, **dadurch gekennzeichnet, dass** die benachbarten Kontaktierungsabschnitte (10) etwa 1 cm voneinander beabstandet sind.

7. Beheizbare Leitung (1) nach zumindest einem der vorhergehenden Ansprüche, **dadurch gekennzeichnet, dass** ein als Plusleiter dienender Leiter (7) mit einem Kontaktierungsabschnitt (10) am Pluspol einer Spannungsquelle verbunden ist, während der andere, als Minusleiter dienende Leiter (7) mit dem Kontaktierungsabschnitt (10) am Minuspol der Spannungsquelle verbunden ist.

8. Beheizbare Leitung (1) nach Anspruch 7, **dadurch gekennzeichnet, dass** der Plusleiter über zwei Verbindungseinrichtungen (8) mit dem Heizleiter (4) verbunden ist, und der Minusleiter auch über zwei Verbindungseinrichtungen (8) mit dem Heizleiter (4) verbunden ist.

9. Beheizbare Leitung (1) nach zumindest einem der vorhergehenden Ansprüche 7 oder 8, **dadurch gekennzeichnet, dass** eine Anzahl der Verbindungseinrichtungen (8), die zwischen Plusleiter (7) und Heizleiter (4) angeordnet sind mit der Anzahl der Verbindungseinrichtungen (8) die zwischen Minusleiter (7) und Plusleiter (4) übereinstimmt.

10. Beheizbare Leitung (1) nach zumindest einem der vorhergehenden Ansprüche 7-9, **dadurch gekennzeichnet, dass** ein im Wesentlichen äquidistanter Abstand zweier benachbarter Verbindungseinrichtungen (8), die den Plusleiter (7) mit dem Heizleiter (4) bzw. den Minusleiter (7) mit dem Heizleiter (4) verbinden, beispielsweise 10 cm beträgt.

11. Beheizbare Leitung (1) nach zumindest einem der vorhergehenden Ansprüche 7-10, **dadurch gekennzeichnet, dass** die den Plusleiter mit dem Heizleiter (4) verbindenden Verbindungseinrichtungen (8) gegenüber den den Minusleiter (7) mit dem Heizleiter (4) verbindenden Verbindungseinrichtungen (8) versetzt angeordnet sind.

12. Beheizbare Leitung (1) nach zumindest einem der vorhergehenden Ansprüche 7-11, **dadurch gekennzeichnet, dass** jede Verbindungseinrichtung (8) in ungetrenntem Zustand zwei im Wesentlichen parallel zueinander verlaufende Verbindungsleiter (9) umfasst.

13. Beheizbare Leitung (1) nach zumindest einem der vorhergehenden Ansprüche 7-12, **dadurch gekennzeichnet, dass** der Abstand zwischen jeweils zwei benachbarten Verbindungseinrichtungen (8), welche den Plusleiter (7) mit dem Heizelement (4) verbinden, mit dem Abstand zwischen jeweils zwei benachbarten Verbindungseinrichtungen (8), welche den Minusleiter (7) mit dem Heizleiter (4) verbinden, im Wesentlichen übereinstimmt.

14. Beheizbare Leitung (1) nach zumindest einem der vorhergehenden Ansprüche 7-13, **dadurch gekennzeichnet, dass** durch die Mitführung sowohl des Plus-, als auch des Minusleiters die Leitung (1) die zusätzliche Funktion eines elektrischen Leiters übernimmt, so dass eine Durchleitung von Strom durch die Leitung (1) ermöglicht wird.

## Claims

1. Heatable conduit (1), in particular for the transport of fluids in vehicles, comprising at least one inner layer (2), one outer layer (3) and a heating element (4), wherein the inner layer (2) has a higher thermal conductivity than the outer layer (3), at least within the operation temperature range of the heatable conduit (1),
**characterised in that** the conduit (1) has at least four layers, having two reinforcing layers (5) between the inner layer (2) and the outer layer (3), wherein the heating element (4) is arranged between the two reinforcing layers (5) and essentially makes contact with the reinforcing layers (5) and at least one electrical conductor (7) is arranged within the conduit (1) and extending along the conduit (1).

2. Heatable conduit (1) according to claim 1, **characterised in that** two electrical conductors (7) are provided which extend essentially along the conduit (1).

3. Heatable conduit (1) according to at least one of the preceding claims, **characterised in that** the heatable conduit (1) can be connected to an electrical consumer.

4. Heatable conduit (1) according to at least one of the preceding claims, **characterised in that** the heating element (4) provided, for example, in the form of a heating conductor, is electrically connected at one end, via a connecting device (8), to the electrical conductor (7) which extends along the conduit.

5. Heatable conduit (1) according to at least one of the preceding claims, **characterised in that** a contacting section (10) of the heating conductor (4) can be connected to the negative pole of a voltage source and a contact section (10) of the electrical conductor (7) can be connected to the positive pole of the voltage source.

6. Heatable conduit (1) according to claim 5, **characterised in that** the mutually adjacent contacting sections (10) are separated from one another by approximately 1 cm.

7. Heatable conduit (1) according to at least one of the preceding claims, **characterised in that** a conductor (7) serving as a positive conductor is connected to a contacting section (10) at the positive pole of a voltage source, whereas the other conductor (7) serving as the negative conductor is connected to the contacting section (10) at the negative pole of the voltage source.

8. Heatable conduit (1) according to claim 7, **characterised in that** the positive conductor is connected, via two connecting devices (8), to the heating conductor (4) and the negative conductor is also connected, via two connecting devices (8), to the heating conductor (4).

9. Heatable conduit (1) according to at least one of the preceding claims 7 or 8, **characterised in that** a number of the connecting devices (8) which are connected between the positive conductor (7) and the heating conductor (4) matches the number of connecting devices (8) which are connected between the negative conductor (7) and the heating conductor (4).

10. Heatable conduit (1) according to at least one of the preceding claims 7-9, **characterised in that** an essentially equidistant spacing between two adjacent connecting devices (8) which connect the positive conductor (7) to the heating conductor (4) or which connect the negative conductor (7) to the heating conductor (4) is, for example, 10 cm.

11. Heatable conduit (1) according to at least one of the preceding claims 7-10, **characterised in that** the connecting devices (8) which connect the positive conductor to the heating conductor (4) are arranged offset relative to the connecting devices (8) which connect the negative conductor (7) to the heating conductor (4).

12. Heatable conduit (1) according to at least one of the preceding claims 7-11, **characterised in that** each connecting device (8) comprises, in the unseparated state, two connecting conductors (9) which extend essentially parallel to one another.

13. Heatable conduit (1) according to at least one of the preceding claims 7-12, **characterised in that** the distance between each pair of adjacent connecting devices (8) which connect the positive conductor (7) to the heating element (4) matches the distance between two adjacent connecting devices (8) which connect the negative conductor (7) to the heating conductor (4).

14. Heatable conduit (1) according to at least one of the preceding claims 7-13, **characterised in that**, as a result of the inclusion both of the positive conductor and of the negative conductor, the conduit (1) assumes the function of an electrical conductor so that the conduction of current through the conduit (1) is made possible.

## Revendications

1. Conduite chauffante (1), en particulier pour le transport de fluides dans des véhicules, comportant au moins une couche interne (2), une couche externe (3) et un élément chauffant (4), dans laquelle la couche interne (2) présente une conductivité thermique plus élevée que la couche externe (3) au moins dans la plage de température de service de la conduite chauffante (1),
**caractérisée**
**en ce que** la conduite (1) comporte au moins quatre couches, avec deux couches de renforcement (5) agencées entre les couches interne (2) et externe (3), dans laquelle l'élément chauffant (4) est agencé entre les deux couches de renforcement (5) et est sensiblement en contact avec les couches de renforcement (5), et au moins un conducteur électrique (7) qui s'étend le long de la conduite (1) est pourvu dans la conduite (1).

2. Conduite chauffante (1) selon la revendication 1, **caractérisée en ce que** deux conducteurs électriques (7) qui s'étendent essentiellement le long de la conduite (1) sont pourvus.

3. Conduite chauffante (1) selon au moins l'une des revendications précédentes, **caractérisée en ce que** la conduite chauffante (1) peut être connectée à un consommateur électrique.

4. Conduite chauffante (1) selon au moins l'une des revendications précédentes, **caractérisée en ce que** l'élément chauffant (4), par exemple sous forme d'un conducteur chauffant, est connecté électriquement à une extrémité à l'aide d'un dispositif de connexion (8) avec le conducteur électrique (7) qui s'étend le long de la conduite.

5. Conduite chauffante (1) selon au moins l'une des revendications précédentes, **caractérisée en ce qu'**une section de contact (10) du conducteur chauffant (4) peut être connectée au pôle négatif d'une source de tension et **en ce qu'**une section de contact (10) du conducteur électrique (7) peut être connectée au pôle positif de la source de tension.

6. Conduite chauffante (1) selon la revendication 5, **caractérisée en ce que** les sections de contact voisines (10) sont espacées entre elles d'environ 1 cm.

7. Conduite chauffante (1) selon au moins l'une des revendications précédentes, **caractérisée en ce qu'**un conducteur (7) servant de conducteur positif est connecté à l'aide d'une section de contact (10) au pôle positif d'une source de tension, alors que l'autre conducteur (7) servant de conducteur négatif est connecté à l'aide d'une section de contact (10) au pôle négatif de la source de tension.

8. Conduite chauffante (1) selon la revendication 7, **caractérisée en ce que** le conducteur positif est connecté au conducteur chauffant (4) via deux dispositifs de connexion (8), et **en ce que** le conducteur négatif est également connecté au conducteur chauffant (4) via deux dispositifs de connexion (8).

9. Conduite chauffante (1) selon au moins l'une des revendications précédentes 7 ou 8, **caractérisée en ce qu'**un certain nombre des dispositifs de connexion (8) qui sont agencés entre le conducteur positif (7) et le conducteur chauffant (4) correspondent au nombre de dispositifs de connexion (8) qui sont agencés entre le conducteur négatif (7) et le conducteur positif (4).

10. Conduite chauffante (1) selon au moins l'une des revendications précédentes 7 à 9, **caractérisée en ce qu'**un espacement essentiellement équidistant entre deux dispositifs de connexion voisins (8) qui connectent le conducteur positif (7) au conducteur chauffant (4) et le conducteur négatif (7) au conducteur chauffant (4) est par exemple de 10 cm.

11. Conduite chauffante (1) selon au moins l'une des revendications précédentes 7 à 10, **caractérisée en ce que** les dispositifs de connexion (8) connectant le conducteur positif au conducteur chauffant (4) sont agencés avec un décalage par rapport aux dispositifs de connexion (8) connectant le conducteur négatif (7) au conducteur chauffant (4).

12. Conduite chauffante (1) selon au moins l'une des revendications précédentes 7 à 11, **caractérisée en ce que** chaque dispositif de connexion (8) comporte, à l'état non déconnecté, deux connecteurs de connexion (9) disposés de manière à être essentiellement parallèles entre eux.

13. Conduite chauffante (1) selon au moins l'une des revendications précédentes 7 à 12, **caractérisée en ce que** la distance entre chaque paire dispositifs de connexion voisins (8) qui connectent le conducteur positif (7) à l'élément chauffant (4) correspond essentiellement à la distance entre chaque paire dispositifs de connexion voisins (8) qui connectent le conducteur négatif (7) au conducteur chauffant (4).

14. Conduite chauffante (1) selon au moins l'une des revendications précédentes 7 à 13, **caractérisée en ce que** grâce à la transmission du conducteur positif ainsi que du conducteur négatif, la conduite (1) prend en charge la fonction additionnelle d'un conducteur électrique, de façon à permettre une conduction de courant via la conduite (1).
